# EUROPEAN PATENT APPLICATION

(11) **EP 4 397 778 A1**
(43) Date of publication of application: **10.07.2024**
(21) Application number: 22864605.5
(22) Date of filing: 31.08.2022
(51) Int. Cl.: C22B 23/00, C22B 3/06, C22B 3/44, C22B 7/00

(54) **ALLOY PROCESSING METHOD**

(30) Priority: 31.08.2021 JP 2021140928; 03.09.2021 JP 2021143769; 10.09.2021 JP 2021147811; 26.08.2022 JP 2022135139
(71) Applicant: SUMITOMO METAL MINING CO., LTD., Tokyo 105-8716 (JP)
(72) Inventor: SHOUJI, Hirofumi, Niihama-shi, Ehime 792-0002 (JP); TAKENOUCHI, Hiroshi, Niihama-shi, Ehime 792-0002 (JP); MATSUOKA, Itsumi, Niihama-shi, Ehime 792-0002 (JP); SANJO, Shota, Niihama-shi, Ehime 792-0002 (JP); MATSUGI, Takumi, Niihama-shi, Ehime 792-0002 (JP); HEGURI, Shin-ichi, Niihama-shi, Ehime 792-0002 (JP); ASANO, Satoshi, Niihama-shi, Ehime 792-0002 (JP)
(74) Representative: Jones, Nicholas Andrew
(86) International application number: PCT/JP2022/032711
(87) International publication number: WO 2023/033023

(57) **Abstract**

Provided is a method for effectively obtaining a solution containing nickel and/or cobalt from an alloy that contains copper as well as nickel and/or cobalt, in a waste lithium-ion battery or the like. The present invention is an alloy processing method for obtaining a solution containing nickel and/or cobalt from an alloy that contains copper as well as nickel and/or cobalt, said method including a leaching step for carrying out an acid solution leaching treatment on an alloy-containing slurry in the presence of a sulfurising agent to obtain a leachate and a leaching residue. In the leaching step, the leaching treatment is carried out with the initial concentration of the alloy-containing slurry adjusted to between 100 g/L and 250 g/L. Moreover, in the leaching step, the leaching treatment is preferably carried out while controlling the redox potential (using a silver/silver chloride electrode as a reference electrode) to 200 mV or less. Furthermore, in the leaching step, the leaching treatment is preferably carried out in the presence of the sulfurising agent in an amount in the range of 1.05 to 1.25 equivalent weight (S-mol/Cu-mol) in relation to the amount of copper contained in the alloy.

## Description

### TECHNICAL FIELD

The present invention relates to an alloy processing method for obtaining a solution containing nickel and/or cobalt from an alloy containing nickel and/or cobalt and copper.

### BACKGROUND ART

Lithium ion batteries (hereinafter, also referred to as "LIBs") having the characteristics of being lightweight and high output is loaded on vehicles, such as electric cars and hybrid cars, and electronic devices, such as mobile phones, smartphones, and personal computers.

An LIB has a structure in which a negative electrode material composed of a negative electrode current collector of copper foil and a negative electrode active material such as graphite fixed to the surface thereof and a positive electrode material composed of a positive electrode current collector of aluminum foil and a positive electrode active material such as lithium nickelate and lithium cobaltate fixed thereto are inserted, together with a separator of a porous polypropylene resin film or the like, in an outer can made of a metal such as aluminum or iron or made of plastic such as vinyl chloride, and an organic solvent including an electrolyte such as lithium hexafluorophosphate (LiPF₆) is impregnated as an electrolytic solution.

LIBs used by being built into vehicles or electronic devices such as above eventually become unusable due to deterioration of automobiles, electronic equipment, and so on or due to the lifespans of the LIBs themselves and become waste lithium ion batteries (waste LIBs). The "waste LIBs" include defective products generated during the manufacturing process.

These waste LIBs include valuable components such as nickel, cobalt, and copper, and it is desirable to recover and reuse the valuable components also for the effective use of resources.

In general, when valuable components are tried to be efficiently recovered from devices, members, and materials made of metals, dry processing adopting a principle of pyrometallurgy by charging them in a furnace or the like and dissolving them at high temperature to separate into metals including valuables and slag other than the metals has been broadly performed. For example, Patent Document 1 discloses a method for recovering valuable metals using dry processing. Copper alloys containing nickel and cobalt can be obtained by applying the method disclosed in Patent Document 1 to recovery of valuable metals from waste LIBs.

Such dry processing (hereinafter, also referred to as "dry process") has disadvantage of requiring energy for heating to high temperature by using a furnace but has advantage of being capable of separating various impurities at once. In addition, the slag obtained by dry processing also has advantage of chemically stable properties, less concern about affection on the environment, and easy disposal.

However, when a waste LIB is treated by dry processing, a part of valuable components, in particular, most of cobalt is distributed to the slag, which is a problem that recovery loss of cobalt is unavoidable. The metal obtained by dry processing is an alloy in which valuable components coexist, and in order to reuse, purification for separating each component from this alloy and removing impurities is necessary.

As a method of element separation that has been generally used in dry processing, a method for, for example, separating copper and lead or separating lead and zinc by gradually cooling from a high temperature dissolved state is known. However, when copper and nickel are main components as in waste LIBs, since copper and nickel have properties of uniformly melting in the entire composition range, copper and nickel are simply mixed and solidified in a layer form when gradually cooled and cannot be separated from each other.

Furthermore, there is a purification method by a disproportionation reaction of nickel using carbon monoxide (CO) gas and volatilization and separation of nickel from copper and cobalt, but since poisonous CO gas is used, there is a problem of difficulty in securing of safety.

As a method for separating copper and nickel that has been performed industrially, a method for roughly separating a mixed matte (sulfide) is known. In this method, a matte containing copper and nickel is generated in the smelting process and is gradually cooled as in above to separate into a sulfide rich in copper and a sulfide rich in nickel. However, in also this separation method, the separation of copper and nickel remains at a rough separation level, in order to obtain nickel and copper with high purity, it is necessary to separately perform electrolytic refining and so on.

In addition, a method of utilizing a vapor pressure difference through a chloride has been investigated. However, the method is a process of handling a large amount of toxic chlorine and therefore requires an anti-corrosion measures and a safety measures of devices on a large scale, and it is hard to say that the method is an industrially suitable method.

Thus, separation and purification of each element in the dry processing have disadvantage of remaining at a crude separation level or high cost.

In contrast, wet processing (hereinafter, also referred to as "wet process") using a method of wet smelting using acid treatment, neutralization treatment, solvent extraction treatment, and so on has advantage of less energy consumption and an ability of separating the mixed valuable components individually and recovering them with a high purity grade.

However, when a waste LIB is treated using wet processing, the electrolytic solution components such as a hexafluorophosphoric acid anion contained in the waste LIB is a refractory material that cannot be completely decomposed even with sulfuric acid with a high concentration at high temperature, and is mixed in the acid solution leaching valuable components therein. Since the hexafluorophosphoric acid anion is a water-soluble carbonate, it is also difficult to recover phosphorus and fluorine from an aqueous solution after the recovery of valuables, and there are major environmental constraints, such as the need to take various measures, in order to suppress release into public sea areas and so on.

Furthermore, it is not easy to obtain a solution that can efficiently leach valuable components from a waste LIB with an acid only and can be supplied to purification. In particular, the waste LIB main body is hardly leached with an acid or the like, and it is not easy to completely leach valuable components. If leaching is forcibly performed by, for example, using a strong oxidizing acid, impurity components that are not industrially recovery targets, such as aluminum, iron, and manganese, are also leached together with valuable components. Consequently, the cost for the neutralizer for treating the impurity by neutralization increases, resulting in a problem of increasing the generated wastewater and sediment quantities. Furthermore, charge may remain in waste LIBs. If waste LIBs are directly treated, heat generation, explosion, and so on may be caused. Accordingly, processing for discharging residual charge takes time and effort.

Thus, treatment of waste LIBs by wet processing only is also not necessarily an advantageous method.

Accordingly, it has been tried to separate valuable components and other components from waste LIBs, which are difficult by single treatment of the above-described dry processing or wet processing, by a combination method of dry processing and wet processing, i.e., removing impurities as much as possible by dry processing such as roasting of waste LIBs to obtain a uniform waste LIB processed product, and separating the obtained processed product into valuable components and other components by wet processing.

In such a combination method of dry processing and wet processing, fluorine and phosphorus in the electrolytic solution are removed by volatilization in dry processing, and plastic as the structure parts and members of organic materials such as separator of waste LIBs are also decomposed by heat. The waste LIB processed product through dry processing is obtained uniformly and is therefore easily handled as a uniform raw material also in wet processing.

However, only a mere combination of dry processing and wet processing still has a problem of recovery loss of cobalt included in waste LIBs due to distribution to the slag.

For example, a method of efficiently distributing cobalt to the metal not to the slag through adjustment of the treatment conditions in dry processing and performing reduction-melting so as to reduce the distribution to the slag is also suggested. However, the metal obtained by such a method becomes a slightly soluble corrosion-resistant alloy containing nickel and cobalt with copper as the base. Even if it is tried to separate and recover valuable components from this corrosion-resistant alloy by wet processing, acid dissolution is difficult, and effective recovery is impossible.

For example, when a chlorine gas is used in order to leach the corrosion-resistant alloy, the obtained solution (leachate) contains a high concentration of copper and relatively low concentrations of nickel and cobalt. Although nickel and cobalt in the leachate can be easily separated by a known method such as solvent extraction, it is difficult to separate, in particular, copper from nickel and cobalt easily and at low cost.

Recovery of valuable metals from waste LIBs is attracting attention as an effective use of urban mines, and has been actively developed in recent years. However, as described above, in existing wet processing methods, the concentrations of nickel and cobalt in the solution containing nickel and/or cobalt obtained from the alloy derived from waste LIBs is low, and there is a problem in that the concentration and purification of the obtained solution is costly.

The above-described problems are also present when nickel and/or cobalt and copper are separated from waste batteries other than waste LIBs, and are also present similarly when nickel and/or cobalt and copper are separated from alloys derived from other than waste batteries.

### Citation List

### Patent Document

Patent Document 1: Japanese Unexamined Patent Application, Publication No. 2012-172169

### DISCLOSURE OF THE INVENTION

### Problems to be Solved by the Invention

The present invention has been proposed in view of these circumstances and is purposed to provide a method for efficiently obtaining a solution containing nickel and/or cobalt from an alloy containing nickel and/or cobalt and copper of waste lithium ion batteries and so on.

### Means for Solving the Problems

The present inventors diligently studied and, as a result, found that a solution containing nickel and/or cobalt in a high concentration by adjusting the initial concentration of the slurry including an alloy containing nickel and/or cobalt and copper to a specific range and performing leaching treatment. In addition, it was found that nickel and/or cobalt can be leached more efficiently and effectively by preferably performing leaching treatment while controlling the redox potential (reference electrode: silver/silver chloride electrode) in a specific range or by preferably performing leaching treatment in the presence of a sulfurizing agent in an amount within a specific range with respect to the amount of copper contained in the alloy. Specifically, the present invention provides the followings:
(1) A first invention of the present invention is an alloy processing method for obtaining a solution containing nickel and/or cobalt from an alloy containing nickel and/or cobalt and copper, the method comprising a leaching step of applying leaching treatment with an acid solution to a slurry containing the alloy in a presence of a sulfurizing agent to obtain a leachate and a leached residue, wherein in the leaching step, the leaching treatment is performed by adjusting an initial concentration of the slurry containing the alloy to 100 g/L or more and 250 g/L or less;
(2) A second invention of the present invention is the alloy processing method according to the first invention, wherein in the leaching step, the leaching treatment is performed while controlling a redox potential (using a silver/silver chloride electrode as the reference electrode) to 200 mV or less;
(3) A third invention of the present invention is the alloy processing method according to the first or second invention, wherein in the leaching step, the leaching treatment is performed in a presence of the sulfurizing agent in an amount range of 1.05 to 1.25 equivalents (S-mol/Cu-mol) with respect to the amount of copper contained in the alloy;
(4) A fourth invention of the present invention is the alloy processing method according to any one of the first to third inventions, further comprising a reduction step of adding a reducing agent to the leachate obtained through the leaching step to perform reduction treatment for obtaining a post-reduction solution and a reduction residue;
(5) A fifth invention of the present invention is the alloy processing method according to any one of the first to third inventions, further comprising an oxidative neutralization step of adding a neutralizer and an oxidant to the reduced solution obtained through the reduction step to perform oxidative neutralization treatment to obtain a post-oxidative neutralization solution and an oxidative neutralization residue; and
(6) A sixth invention of the present invention is the alloy processing method according to any one of the first to fifth inventions, wherein the alloy includes an alloy obtained by dissolving a waste battery of a lithium ion battery.

### Effects of the Invention

According to the present invention, nickel and/or cobalt can be efficiently and selectively leached from an alloy containing nickel and/or cobalt and copper such as a waste lithium ion battery, and a solution containing nickel and/or cobalt in a high concentration can be obtained.

### BRIEF DESCRIPTION OF THE DRAWINGS

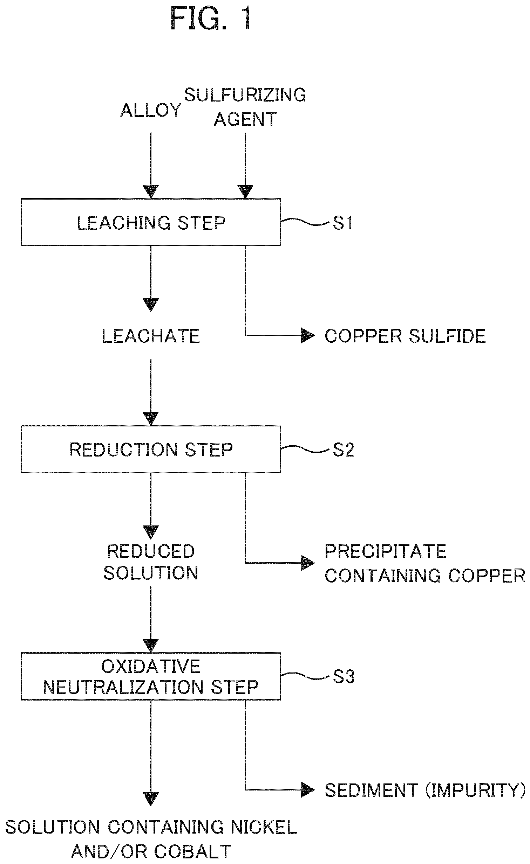

Fig. 1 is a process chart showing an example of the flow of an alloy processing method.

### PREFERRED MODE FOR CARRYING OUT THE INVENTION

Specific embodiments of the present invention (hereinafter, referred to as "the present embodiment") will now be described in detail. The present invention is not limited to the following embodiments, and can be implemented with appropriate modifications within the scope of the purpose of the present invention. In this specification, the expression "X to Y" (X and Y are arbitrary numerical values) means "more than or equal to X and less than or equal to Y".

The alloy processing method according to the present embodiment is a method for obtaining a solution containing nickel and/or cobalt from an alloy containing nickel and/or cobalt and copper.

As the alloy containing nickel and/or cobalt and copper that is a processing object, for example, waste of automobiles and electronic devices due to deterioration, scrap of lithium ion batteries generated due to the lifespans of the lithium ion batteries, and waste batteries such as defective products during the battery manufacturing process can be used. In addition, alloys obtained through reduction by applying such waste batteries to dry processing for heat melting (dissolution) can be used.

Hereinafter, the alloy processing method will be described in more detail using an alloy (alloy containing nickel and/or cobalt and copper) obtained by dissolving a waste battery of a lithium ion battery (hereinafter, also referred to as "waste lithium ion battery") as an example of the processing object.

Fig. 1 is a process chart showing an example of the flow of an alloy processing method according to the present embodiment. This method includes a leaching step S1 of applying leaching treatment with an acid solution to an alloy containing nickel and/or cobalt and copper in the presence of a sulfurizing agent to obtain a leachate and a leached residue, a reduction step S2 of adding a reducing agent to the obtained leachate for performing reduction treatment to obtain a post-reduction solution and a reduction residue, and an oxidative neutralization step S3 of adding a neutralizer and an oxidant to the obtained reduced solution to perform oxidative neutralization treatment to obtain a post-oxidative neutralization solution and an oxidative neutralization residue.

In particular, the method according to the present embodiment is characterized in that in the leaching step S1, the leaching treatment is performed by adjusting the initial concentration of the slurry containing an alloy in a specific range, specifically, in a range of 100 g/L or more and 250 g/L or less. Consequently, nickel and/or cobalt can be efficiently leached, and a solution containing the nickel and/or cobalt in a high concentration can be obtained.

Preferably, in the leaching step S1, the leaching treatment is performed while controlling the redox potential (ORP) to 200 mV or less as the value when a silver/silver chloride electrode is used as the reference electrode. Consequently, nickel and/or cobalt can be more selectively leached by preventing the formation of an oxide film (passivation film) on an alloy surface.

Preferably, in the leaching step S1, the leaching treatment is performed in the presence of a sulfurizing agent in a specific amount range, i.e., in a range of 1.05 to 1.25 equivalents (S-mol/Cu-mol) with respect to the amount of copper contained in the alloy. Consequently, nickel and/or cobalt can be simply leached more efficiently by a short-time operation, and a solution containing the nickel and/or cobalt in a high concentration can be obtained.

### (1) Leaching step

### [Regarding leaching treatment]

In the leaching step S1, leaching treatment with an acid is applied to an alloy containing nickel and/or cobalt and copper (hereinafter, also simply referred to as "alloy"). On this occasion, a sulfurizing agent is added before or simultaneous with the contact of the alloy with the acid, and the leaching treatment is performed in the presence of the sulfurizing agent. By this leaching treatment, a leachate in which nickel and/or cobalt are dissolved and a leached residue mainly containing copper sulfide are obtained.

The reaction occurring in the leaching treatment in the leaching step S1 is shown by the following reaction formulae [1] to [5]. The following formulae show those in which solid sulfur (S) is used as the sulfurizing agent, and sulfuric acid is used as the acid.

Cu + S → CuS [1]

Ni + H₂SO₄ + 1/2O₂ → NiSO₄ + H₂O [2]

Co + H₂SO₄ + 1/2O₂ → CoSO₄ + H₂O [3]

H₂S + 1/2O₂ → S + H₂O [4]

CuS + 2O₂ → CuSO₄ [5]

When an alloy is subjected to leaching treatment in the presence of both an acid and a sulfurizing agent, copper leached from the alloy reacts with the sulfurizing agent and can be precipitated in the form of copper sulfide (reaction formula [1]). The precipitated copper sulfide is recovered as a leached residue. At the same time, nickel and/or cobalt constituting the alloy is leached in the solution by the leaching treatment using an acid, and a leachate in which nickel and cobalt are present in the forms of ions can be obtained (reaction formulae [2] and [3]). Thus, copper and nickel and/or cobalt can be separated from the alloy.

Even when the leached nickel and/or cobalt reacts with the sulfurizing agent and becomes a sulfide, since the acid solution is present, the sulfide is decomposed, and the nickel and cobalt are present in the leachate as ions. In the leachate, copper may partially remain without reacting with the sulfurizing agent, and the copper remaining in the leachate can be separated and removed effectively and efficiently in the reduction step S2 described later.

### [Regarding alloy as processing object]

Examples of the alloy as the processing object, i.e., the alloy obtained by dissolving a waste lithium ion battery include an alloy cast into a plate shape, an alloy drawn into a wire shape and appropriately cut into a bar, and an alloy in a powder form (hereinafter, an alloy in a powder form is also referred to as "alloy powder"), and the shape of the alloy is not particularly limited. In particular, an alloy powder in a powder form is preferably used as the processing object, because the leaching treatment can be performed more effectively and efficiently.

When an alloy powder is used, the leaching treatment can be more effectively performed by adjusting the particle diameter to about 300 um or less. However, since a too small particle diameter of the alloy powder not only increases the cost but also causes dust or ignition, the particle diameter is preferably about 10 um or more.

In the leaching treatment, the alloy as the processing object is preferably pre-washed with a dilute acid in advance. Consequently, activation treatment can be applied to the surface of the alloy, and the leaching reaction can be facilitated.

In addition, in the leaching treatment, pure water or the like is added to the alloy as the processing object to form a slurry, and an acid solution is added to the slurry containing the alloy to perform treatment. The sulfurizing agent is added to the slurry containing the alloy and allowed to coexist therewith.

### [Regarding acid solution]

The acid solution used in the leaching treatment is not particularly limited, and mineral acids such as sulfuric acid, hydrochloric acid, and nitric acid can be used. A mixture solution of these mineral acids may be used. Furthermore, for example, an acid solution of sulfuric acid containing a chloride may be used. In particular, when the alloy as the processing object is derived from a waste lithium ion battery, in order to realize an ideal recycling method of recycling the waste lithium ion battery and using it as raw materials for a lithium ion battery again, so called "battery to battery", an acid including sulfuric acid is preferably used. The use of sulfuric acid allows to obtain a leachate in a form of sulfate which is easily used in a positive electrode material of a lithium ion battery.

The acid solution to be added leaches nickel and/or cobalt contained in the alloy and generates salts of nickel and cobalt, but a surplus (excessive) free acid (e.g., when a sulfuric acid solution is used, "free sulfuric acid") that is used as a driving force for promoting the leaching reaction quickly is also necessary. Accordingly, an amount of exceeding 1 equivalent and 1.2 equivalents or less is necessary.

In the leaching treatment, the acid solution and the alloy are supplied to a device with multiple stages of connected mixing sections, such as a thickener, and the acid and the alloy may be brought into stepwise contact with each other in countercurrent flow. For example, an acid and an alloy are brought into stepwise contact with each other in countercurrent flow by supplying the alloy to the uppermost mixing section of this device and supplying the acid to the lowermost mixing section of the device.

### [Regarding sulfurizing agent]

As the sulfurizing agent that is added together with the acid, sodium hydrosulfide or elemental sulfur can be used. When elemental sulfur is used, it is preferable to appropriately pulverize the sulfur to facilitate the reaction.

Here, in the method according to the present embodiment, preferably, an alloy is subjected to the leaching treatment in the presence of the sulfurizing agent in an amount range of 1.05 to 1.25 equivalents (S-mol/Cu-mol) with respect to the amount of copper contained in the alloy. Consequently, the leaching rate of nickel and/or cobalt can be further improved.

Since the sulfurizing agent is used for fixing all copper included in an alloy as copper sulfide and leaching nickel and cobalt efficiently and selectively, the necessary amount is 1 equivalent (S-mol/Cu-mol) or more with respect to the amount of copper contained in the alloy. In order to proceed sulfidation efficiently by the sulfurizing agent, it is advantageous to increase the amount of the sulfurizing agent. Accordingly, an amount of 1.05 equivalent or more is preferable. However, since the presence of an excessive amount of the sulfurizing agent has a risk of generating hydrogen sulfide gas, it is desirable to be avoided. In addition, there is a risk of increasing the amount of residue to increase the handling effort. From these viewpoints, the upper limit of the amount of the sulfurizing agent is 1.25 equivalents or less.

The dosage of the sulfurizing agent is more preferably a range of 1.15 to 1.25 equivalents (S-mol/Cu-mol) with respect to the amount of copper contained in the alloy. More preferably, in the leaching treatment in the presence of the sulfurizing agent in the amount mentioned above, the leaching rate of the nickel and/or cobalt can be further improved.

### [Regarding conditions of leaching treatment]

### (Slurry concentration)

The method according to the present embodiment is characterized in that the initial concentration of a slurry including an alloy containing nickel and/or cobalt is adjusted in a specific range and that an acid solution is added to the slurry to perform leaching treatment. Specifically, the leaching treatment is performed by adjusting the initial concentration of a slurry including an alloy to 100 g/L or more, preferably 150 g/L or more, and more preferably 200 g/L or more.

As a result of studies by the present inventors, it was revealed that in leaching treatment, the initial concentration of a slurry including an alloy is an important factor that affects, for example, the stirring power of the reaction equipment, the acid solution addition rate, and leaching time. In the method according to the present embodiment, nickel and/or cobalt can be efficiently leached by performing leaching treatment in a specific initial concentration of the slurry adjusted to 100 g/L or more, and a solution containing the nickel and/or cobalt in a high concentration can be obtained quickly and simply.

The upper limit of the initial concentration of the slurry is not particularly limited, but is preferably 250 g/L or less. If the slurry concentration exceeds 250 g/L, the time required for leaching is elongated, and needs of strengthening the stirring ability for saving the leaching time and increasing the dosage of the acid solution arise. However, if the acid concentration is increased too much, there is a risk that the acid reacts violently locally to generate hydrogen gas and hydrogen sulfide gas. If the slurry concentration is too high, the content of the alloy is too large, there is a risk that effective stirring is impossible in the leaching reaction to decrease the leaching rate. In addition, as the reaction progresses, the stirring equipment, the reaction vessel, and so on are likely to wear out, leading to an increase in the processing cost.

The method for forming a slurry of an alloy containing nickel and/or cobalt as the processing object and the method for adjusting the concentration are not particularly limited. For example, pure water is added to the alloy, and the amount thereof may be adjusted.

### (pH)

In the leaching treatment, it is preferable to measure the pH of the obtained leachate and to monitor and control the measured pH. As the metals of nickel and cobalt are dissolved in the acid during the leaching treatment, the acid is consumed to increase the pH. Accordingly, the treatment is preferably performed while appropriately controlling the pH condition in a range in which the leaching reaction of the valuable metal is accelerated.

Specifically, it is preferable to perform the treatment by controlling the pH condition such that the pH of the obtained leachate is in a range of 0.8 or more and 1.6 or less. When the leaching treatment is performed in such a range, the leaching is accelerated, and also it is possible to more effectively suppress the situation in which the precipitated copper sulfide is excessively oxidized and redissolved.

The pH can be controlled by adjusting the dosage of the acid. The approximate amount of the acid added to the end point of the reaction is preferably about 1.2 equivalents with respect to the total amount of nickel and/or cobalt contained in the alloy.

### (Redox potential)

In the leaching treatment, the redox potential (ORP) of the obtained leachate is measured, and the measured ORP is preferably monitored and controlled.

Specifically, in the method according to the present embodiment, the leaching treatment is preferably performed while controlling the ORP to 200 mV or less as the value when a silver/silver chloride electrode is used as the reference electrode.

Here, the alloy as the processing object easily forms an oxide film in a solution containing an oxidant and dissolved oxygen as in the leaching using an acid. If an oxide film is formed on the alloy, even in the state in which nickel and/or cobalt as the recovery target remains in the alloy, leaching does not sufficiently proceed, and so-called passivation, i.e., an increase of only the ORP value of the leachate, may occur. The increase of the ORP accelerates the leaching of copper and can no longer be ignored.

Accordingly, in the method according to the present embodiment, the leaching treatment is preferably performed while controlling the ORP in a specific range, specifically, while controlling the ORP to 200 mV or less as the value when a silver/silver chloride electrode is used as the reference electrode. For example, formation of an oxide film (passivation film) on the alloy as the processing object can be effectively prevented by maintaining the ORP value as low as 200 mV or less through reduction of the amount of the oxidant supplied.

Thus, preferably, when the leaching treatment is performed while maintaining the ORP lower than before, formation of a passivation film on the surface of the alloy is prevented, and leaching of nickel and/or cobalt can be progressed more efficiently and effectively. In addition to the above, the reaction of copper and a sulfurizing agent more smoothly progresses, copper can be efficiently fixed as a sulfide, and leaching of copper is suppressed to allow nickel and/or cobalt to be more selectively leached.

The lower limit of the ORP is not particularly limited, but is preferably 50 mV or more and more preferably 100 mV or more. If the ORP is excessively low, the rate of the leaching reaction of nickel and/or cobalt may decrease. In addition, sulfides of nickel and/or cobalt may begin to be generated, resulting in recovery loss.

Examples of the means for controlling the ORP include a method of adding an oxidant. In the method according to the present embodiment, since the ORP is preferably controlled to 200 mV or less, when the ORP of the leachate is increased too high, the ORP can be decreased by decreasing the amount of the supply of the oxidant or stopping the supply.

As the oxidant, a known oxidant such as oxygen, air, hydrogen peroxide, and ozone gas can be used. For example, when a gaseous substance is used as an oxidant, the ORP of the leachate can be controlled by performing bubbling into the solution and adjusting the supply amount (air supply amount).

Since the ORP varies depending on the pH and temperature, it is preferable to simultaneously maintain the ORP, the pH, and the solution temperature within the respective appropriate ranges during the leaching treatment while simultaneously measuring the ORP, the pH, and the solution temperature.

### (Other conditions)

The conditions such as temperature and time in the leaching treatment are preferably determined in appropriate ranges by performing preliminary tests. In the leaching treatment, the leachate may be bubbled with air or the like so that the reaction uniformly proceeds. Furthermore, divalent copper ions may be added during the leaching treatment. Consequently, the divalent copper ions function as a catalyst to accelerate the leaching reaction.

### [Reduction step]

In the reduction step S2, a reducing agent is added to the leachate obtained by the leaching treatment in the leaching step S1 to perform reduction treatment to obtain a reduced solution (post-reduction solution) containing nickel and/or cobalt and a reduction residue.

In the leaching treatment, copper constituting an alloy is leached together with nickel and/or cobalt by an acid and is dissolved in a solution, and may partially remain in the solution without reacting with a sulfurizing agent. Accordingly, in the reduction step S2, precipitate containing copper can be generated by reducing a small amount of copper remaining in the obtained leachate, and the reduction residue including the generated precipitate is separated by solid-liquid separation to obtain a reduced solution including nickel and/or cobalt separated from copper. Consequently, copper can be selectively separated while maintaining a high nickel and/or cobalt leaching rate.

The reducing agent is not particularly limited, and for example, a less-noble metal than copper can be used. In particular, it is preferable to use metal including nickel and/or cobalt to reduce copper by bringing the leachate and the metal into contact with each other. More specifically, as the metal including nickel and/or cobalt, the processing object of the method according to the present embodiment, i.e., the alloy containing nickel and/or cobalt and copper, which becomes an object of the leaching treatment in the leaching step S1, can be used. The reducing agent is not limited to one composed of one component and may be a mixture composed of multiple components.

Since the method according to the present embodiment obtains a solution containing nickel and/or cobalt, when metal including nickel and/or cobalt as the recovery target is used as the reducing agent, there is no need to separately collect the reducing agent in the subsequent step, which is industrially advantageous. Justifiably, since the metal including nickel and/or cobalt used as the reducing agent is itself oxidized and is dissolved in its post-reduction solution, the recovered amount of nickel and/or cobalt can be increased.

As the reducing agent, in addition to the above-described metal, sulfide can also be used. The sulfide may be in a solid, liquid, or gaseous form. The reducing agent may be a mixture of a powder of the alloy as the processing object of the leaching treatment and sulfur. When sulfur is used as the reducing agent, sulfur may be added in an amount equivalent to copper included in the treatment solution and the powder of the alloy.

As the reducing agent, atomized powder obtained by rapidly cooling the molten metal of the alloy as the processing object and pulverizing it may be used. When the powder of the alloy as the processing object of leaching treatment is itself used as the reducing agent, a powder including nickel and cobalt in an amount that is equal to or greater than the equivalent amount required for reducing copper in the leachate may be used.

The conditions for the reduction treatment are preferably controlled such that the pH of the obtained post-reduction solution is 1.6 or less. The solution temperature is preferably 50°C or more similar to the leaching treatment. The end point (reaction end point) of removal of copper can be the time when the ORP becomes 0 mV or less.

### [Oxidative neutralization step]

The method according to the present embodiment can include an oxidative neutralization step S3. In the oxidative neutralization step S3, a neutralizer and an oxidant are added to the reduced solution obtained through the reduction step S2 to perform oxidative neutralization treatment to obtain a post-oxidative neutralization solution and an oxidative neutralization residue.

Thus, precipitate of impurities such as iron and phosphorus included in the reduced solution is generated and separated by performing oxidative neutralization treatment, and purified solution containing nickel and/or cobalt at a high concentration can be obtained.

As the oxidant, an oxidant such as hydrogen peroxide and hypochlorous acid is preferably used. The addition of the oxidant is preferably performed by monitoring the redox potential (ORP) of the solution and controlling the ORP in a predetermined range. Specifically, the oxidant is added to the solution to control the ORP (silver/silver chloride is used as the reference electrode) in, for example, a range of 380 mV or more and 430 mV or less.

After adding an oxidant to allow the oxidation reaction to start, the pH of the solution is preferably adjusted in a range of 3.8 or more and 4.5 or less by adding a neutralizer. Such neutralization treatment by adjusting the pH in the above range can effectively precipitate at least impurities such as iron and/or phosphorus.

The neutralizer is not particularly limited, but an alkali such as sodium hydroxide and potassium hydroxide is preferably used.

In the oxidative neutralization treatment, the oxidant may be added to the reduced solution after the neutralizer is added, but the oxidant and the neutralizer may be simultaneously added to the reduced solution. In particular, it is preferable to add the neutralizer to the reduced solution after the oxidant is added. For example, when an oxidant is added to a reduced solution with a high pH due to addition of a neutralizer, if the reduced solution contains iron as an impurity, iron is not sufficiently oxidized, precipitate of Fe(OH)₃ (iron sludge) is not generated, separation of impurities may be insufficient.

Trace impurities that could not be removed even by the oxidative neutralization treatment may be removed by a removing step by known technology such as a solvent extract method and an ion exchange method after the oxidative neutralization step S3.

### EXAMPLES

The present invention will now be more specifically described with reference to Examples, but the present invention is not limited thereto.

### [Example 1]

### (Leaching step)

Dry processing was performed by performing oxidative-roasting through heating a waste lithium ion battery (waste LIB) in an oxidative atmosphere and subsequently reducing the obtained oxidatively-roasted product through adding a reducing agent and heat melting. The alloy in a molten state obtained by the reduction-melting was coagulated to obtain an alloy powder having a particle diameter of less than 300 um. The obtained alloy powder was used as a processing object alloy (alloy including nickel and cobalt and copper). Table 1 below shows the composition of the alloy powder analyzed using an ICP analyzer.

**[Table 1]**

| | Grade (mass%) | | | |
|---|---|---|---|---|
| | Ni | Co | Cu | Fe |
| Alloy | 12 | 12 | 74 | 1.4 |

Subsequently, the alloy powder with the composition shown in Table 1 above was leached with a sulfuric acid solution under the condition shown in Table 2 below.

Specifically, pure water and the alloy powder were charged in a 500-mL separable flask equipped with a baffle plate to prepare a slurry including the alloy. On this occasion, the concentration of the slurry (initial concentration) was adjusted to 200 g/L.

Elemental sulfur as a sulfurizing agent was added to the slurry of the alloy in an amount of 1.25 equivalents (S-mol/Cu-mol) with respect to the amount of copper contained in the alloy powder, and the mixture was warmed in a water bath to the preset temperature of 60°C and maintained at the temperature while stirring at a rotational speed of 1000 rpm.

Subsequently, a 70% sulfuric acid solution was added to the slurry at a rate of 14 mL/hr to perform leaching treatment of the alloy, while controlling to maintain pH 1.6.

The value of redox potential (ORP) (reference electrode: silver/silver chloride electrode) was adjusted by air bubbling at a flow rate of 0.5 L/min. The reaction end point was the point at which the ORP value reached 250 mV.

The slurry after the leaching was recovered and subjected to solid-liquid separation by filtration using a vacuum pump, and the grades of the filtrate (leachate) and the leached residue after the leaching were analyzed with an ICP analyzer.

### [Example 2]

In Example 2, treatment was performed as in Example 1 except that the concentration of the slurry (initial concentration) was 100 g/L.

### [Conditions and results]

Table 2 below collectively shows the leaching conditions in Examples 1 and 2. Table 3 below shows the analysis results of the leachates and leached residues in Examples 1 and 2.

**[Table 2]**

| | Alloy powder (g) | Slurry concentration (g/L) | Sulfur | | Test conditions | | |
|---|---|---|---|---|---|---|---|
| | | | Equivalent (vs Cu) | Quantity (g) | pH | Temperature (°C) | ORP (mV) |
| Example 1 | 50.0 | 200 | 1.25 | 24.3 | 1.6 | 60 | 250 |
| Example 2 | 25.0 | 100 | 1.25 | 12.1 | | | |

**[Table 3]**

| | Conditions | Test result | | Leachate concentration (g/L) | | | Leach rate (%) | | |
|---|---|---|---|---|---|---|---|---|---|
| | Slurry concentration (g/L) | Sulfuric acid amount (mL) | Time (min) | Ni | Co | Cu | Ni | Co | Cu |
| Example 1 | 200 | 25.9 | 212 | 21 | 21 | 0.3 | 99.6 | 99.5 | 0.2 |
| Example 2 | 100 | 14.0 | 134 | 11 | 11 | 0.2 | 99.1 | 99.1 | 0.3 |

As shown by the results of Table 3, nickel and cobalt could be leached at a high leaching rate in both Examples 1 and 2. It was revealed from the results of Example 2 compared to Example 1 that the concentrations of nickel and cobalt in the obtained leachate can be increased by increasing the concentration of the slurry subjected to the leaching treatment.

### [Example 3]

### (Leaching step)

Dry processing was performed by performing oxidative-roasting through heating a waste lithium ion battery (waste LIB) in an oxidizing atmosphere and subsequently reducing the obtained oxidatively-roasted product through adding a reducing agent and heat melting. The alloy in a molten state obtained by the reduction-melting was coagulated to obtain an alloy powder having a particle diameter of less than 300 um. The obtained alloy powder was used as a processing object alloy (alloy including nickel and cobalt and copper). Table 4 below shows the composition of the alloy powder analyzed using an ICP analyzer.

**[Table 4]**

| | Grade (mass%) | | | |
|---|---|---|---|---|
| | Ni | Co | Cu | Fe |
| Alloy | 24 | 12 | 62 | 1.5 |

Subsequently, the alloy powder with the composition shown in Table 4 above was leached with a sulfuric acid solution under the condition shown in Table 5 below.

Specifically, pure water and the alloy powder were charged in a 500-mL separable flask equipped with a baffle plate to prepare a slurry including the alloy. On this occasion, the concentration of the slurry (initial concentration) was adjusted to 200 g/L.

Elemental sulfur as a sulfurizing agent was added to the slurry of the alloy in an amount of 1.25 equivalents (S-mol/Cu-mol) with respect to the amount of copper contained in the alloy powder, and the mixture was warmed in a water bath to the preset temperature of 60°C and maintained at the temperature while stirring at a rotational speed of 1000 rpm.

The value of redox potential (ORP) (reference electrode: silver/silver chloride electrode) was adjusted by air bubbling at a flow rate of 0.5 L/min using a cylindrical gas jet tube. The leaching of the alloy powder and pH adjustment were controlled by adding a 70% sulfuric acid solution at a rate of 14 mL/min to maintain pH 1.0.

In Example 3, the leaching reaction was proceeded while controlling the ORP value to be maintained at 200 mV or less by adjusting the air flow rate. Although the air supply was stopped after it was assumed that the prescribed reaction had completed, the ORP value slightly increased, but the reaction ended at the time when the ORP value reached 250 mV.

The slurry after the leaching was recovered and subjected to solid-liquid separation by filtration using a vacuum pump, and the grades of the filtrate (leachate) and the leached residue after the leaching were analyzed with an ICP analyzer.

### [Comparative Example 1]

In Comparative Example 1, air was supplied as in Example 3, but the ORP value was left as it was without any specific control. Even after the air supply was stopped, the ORP value of about 250 mV was maintained. Comparative Example 1 was performed as in Example 3 except the above.

### [Conditions and results]

Table 5 below collectively shows the conditions of leaching treatment in Example 3 and Comparative Example 1. Table 6 shows the analysis results of the leachate and leached residue.

**[Table 5]**

| | Stirring (rpm) | Air (L/min) | Sulfuric acid (mL/h) | Setting | | | Dosage (g) | | ORP control | End point judgement |
|---|---|---|---|---|---|---|---|---|---|---|
| | | | | pH | °C | Reduction | Alloy | Elemental sulfur | | |
| Example 3 | 1000 | 0.5 | 20 | 1.0 | 60 | None | 25.0 | 9.8 | 200 mV or less | Air: ORP 250 mV at 0 |
| Comparative Example 1 | 1000 | 0.5 | 20 | 1.0 | 60 | None | 25.0 | 9.8 | Left as it is | Air: ORP 250 mV at 0 |

**[Table 6]**

| | 70% sulfuric acid (mL) | Reaction time (min) | Leaching final solution | | | Leachate concentration (g/L) | | | Leach rate (%) | | |
|---|---|---|---|---|---|---|---|---|---|---|---|
| | | | Temperature | pH | ORP | Ni | Co | Cu | Ni | Co | Cu |
| Example 3 | 26.0 | 130 | 59.6 | 1.00 | 250 | 21 | 10 | 2.3 | 94 | 94 | 3.7 |
| Comparative Example 1 | 31.7 | 120 | 59.7 | 1.00 | 265 | 22 | 11 | 16 | 93 | 92 | 26 |

As shown in the results of Table 6, in Example 3 in which leaching treatment was performed while controlling to maintain 200 mV or less of the ORP value, leaching of copper was suppressed, and leaching of nickel and cobalt could be selectively accelerated. In contrast, in Comparative Example 1, the copper concentration in the leachate increased to 16 g/L, and nickel and cobalt could not be selectively leached.

Thus, it was revealed that leaching of nickel and cobalt can be accelerated by performing leaching while controlling the ORP to 200 mV or less. This is considered to be due to the fact that formation of an oxide film (passivation film) on the surface of the alloy of the processing object could be suppressed by controlling the ORP.

### [Example 4]

### (Leaching step)

Dry processing was performed by performing oxidative-roasting through heating a waste lithium ion battery (waste LIB) in an oxidativr atmosphere and subsequently reducing the obtained oxidatively-roasted product through adding a reducing agent and heat melting. The alloy in a molten state obtained by the reduction-melting was coagulated to obtain an alloy powder having a particle diameter of less than 300 um. The obtained alloy powder was used as a processing object alloy (alloy including nickel and cobalt and copper). Table 7 below shows the composition of the alloy powder analyzed using an ICP analyzer.

**[Table 7]**

| | Grade (mass%) | | | |
|---|---|---|---|---|
| | Ni | Co | Cu | Fe |
| Alloy | 12 | 12 | 74 | 1.4 |

Subsequently, the alloy powder with the composition shown in Table 7 above was leached with a sulfuric acid solution under the condition shown in Table 8 below.

Specifically, pure water and the alloy powder were charged in a 500-mL separable flask equipped with a baffle plate to prepare a slurry including the alloy. On this occasion, the concentration of the slurry (initial concentration) was adjusted to 200 g/L.

Elemental sulfur several millimeters in diameter as a sulfurizing agent was added to the slurry of the alloy in an amount of 1.05 equivalents (S-mol/Cu-mol) with respect to the amount of copper contained in the alloy powder, and the mixture was warmed in a water bath to the preset temperature of about 60°C and maintained at the temperature while stirring at a rotational speed of 1000 rpm.

The value of redox potential (ORP) (reference electrode: silver/silver chloride electrode) was adjusted by air bubbling at a flow rate of 0.5 L/min, and a 70% sulfuric acid solution was added thereto at a rate of 14 mL/hr for leaching treatment of the alloy, while controlling to maintain pH 1.2.

The reaction end point was the point at which the ORP value reached 250 mV.

The slurry after the leaching was recovered and subjected to solid-liquid separation by filtration using a vacuum pump, and the grades of the filtrate (leachate) and the leached residue after the leaching were analyzed with an ICP analyzer.

### [Example 5]

In Example 5, the treatment was performed as in Example 4 except that the dosage of elemental sulfur was 1.15 equivalents (S-mol/Cu-mol) with respect to the amount of copper contained in the alloy powder.

### [Example 6]

In Example 6, the treatment was performed as in Example 4 except that the dosage of elemental sulfur was 1.25 equivalents (S-mol/Cu-mol) with respect to the amount of copper contained in the alloy powder.

### [Conditions and results]

Table 8 below collectively shows the leaching treatment conditions in Examples 4 to 6. Table 9 shows the analysis results of the leachates and leached residues in Examples 4 to 6.

**[Table 8]**

| | Alloy powder (g) | Starting solution amount (mL) | Sulfur | | Test conditions | | |
|---|---|---|---|---|---|---|---|
| | | | Equivalent (vs Cu) | Quantity (g) | pH | Temperature (°C) | ORP (mV) |
| Example 4 | 25.0 | 250 | 1.05 | 10.2 | 1.2 | 60 | 250 |
| Example 5 | | | 1.15 | 11.1 | | | |
| Example 6 | | | 1.25 | 12.1 | | | |

**[Table 9]**

| | Test result | | Leachate concentration (g/L) | | | Leach rate (%) | | |
|---|---|---|---|---|---|---|---|---|
| | Sulfuric acid amount (mL) | Time (min) | Ni | Co | Cu | Ni | Co | Cu |
| Example 4 | 16.4 | 167 | 11.6 | 11.6 | 0.3 | 97.3 | 97.7 | 0.4 |
| Example 5 | 16.4 | 146 | 11.8 | 11.7 | 0.3 | 99.0 | 98.8 | 0.4 |
| Example 6 | 16.5 | 150 | 11.8 | 11.9 | 0.2 | 99.0 | 98.9 | 0.4 |

As shown in the results of Table 9, nickel and cobalt could be efficiently leached at a high leaching rate by adjusting the dosage of the sulfurizing agent to 1.05 to 1.25 equivalents with respect to the amount of copper contained in the alloy powder. It was inferred that in particular, in Examples 5 and 6 in which the dosage of the sulfurizing agent was 1.15 equivalents or more, since the sulfurizing agent is supplied in an amount sufficient for fixation (sulfuration) of copper contained in the alloy, leaching of nickel and cobalt progressed to 99%.

It was confirmed that in Examples 5 and 6 in which the dosage of the sulfurizing agent was 1.15 equivalents or more, the time for the ORP of the leachate reaches 250 mV is shortened compared to Example 4 (sulfurizing agent dosage: 1.05 equivalents), and the treatment can be performed more efficiently.

## Claims

1. An alloy processing method for obtaining a solution containing nickel and/or cobalt from an alloy containing nickel and/or cobalt and copper, comprising:
a leaching step of applying leaching treatment with an acid solution to a slurry containing the alloy in a presence of a sulfurizing agent to obtain a leachate and a leached residue, wherein
in the leaching step, the leaching treatment is performed by adjusting an initial concentration of the slurry containing the alloy to 100 g/L or more and 250 g/L or less.

2. The alloy processing method according to claim 1, wherein
in the leaching step, the leaching treatment is performed while controlling a redox potential (using a silver/silver chloride electrode as a reference electrode) to 200 mV or less.

3. The alloy processing method according to claim 1 or 2, wherein
in the leaching step, the leaching treatment is performed in a presence of the sulfurizing agent in an amount range of 1.05 to 1.25 equivalents (S-mol/Cu-mol) with respect to an amount of copper contained in the alloy.

4. The alloy processing method according to claim 1, further comprising:
a reduction step of adding a reducing agent to the leachate obtained through the leaching step to perform reduction treatment for obtaining a post-reduction solution and a reduction residue.

5. The alloy processing method according to claim 1, further comprising:
an oxidative neutralization step of adding a neutralizer and an oxidant to the reduced solution obtained through the reduction step to perform oxidative neutralization treatment to obtain a post oxidative neutralization solution and an oxidative neutralization residue.

6. The alloy processing method according to claim 1, wherein
the alloy includes an alloy obtained by dissolving a waste battery of a lithium ion battery.
